# FASCICULE DE BREVET EUROPEEN

(11) **EP 3 107 747 B1**
(45) Date de publication et mention de la délivrance du brevet: **29.05.2019**
(21) Numéro de dépôt: 15706905.5
(22) Date de dépôt: 10.02.2015
(51) Int. Cl.: B60J 7/06

(54) **STRUCTURE D'ABRI, EN PARTICULIER D'UN PLATEAU DE CHARGE, TEL QU'UNE PLATEFORME DE CAMION, DE REMORQUE OU SIMILAIRE, ET ABRI INTÉGRANT UNE TELLE STRUCTURE**
ÜBERDACHUNGSKONSTRUKTION, INSBESONDERE FÜR EINE LADEPLATTFORM, WIE EINE PRITSCHE EINES LASTWAGENS, EINE PRITSCHE EINES ANHÄNGERS ODER DERGLEICHEN, SOWIE ÜBERDACHUNG MIT SOLCH EINER STRUKTUR
CANOPY STRUCTURE, IN PARTICULAR FOR A LOADING PLATFORM, SUCH AS A TRUCK FLATBED, TRAILER FLATBED OR THE LIKE, AND CANOPY INCORPORATING SUCH A STRUCTURE

(30) Priorité: 19.02.2014 FR 1451332; 20.03.2014 US 201414220226
(43) Date de publication de la demande: 28.12.2016
(73) Titulaire: S.A. Libner, 79400 Saint-Maixent l'Ecole (FR)
(72) Inventeur: LIBNER, Hervé, F-79400 Saint Maixent L'ecole (FR)
(74) Mandataire: Godineau, Valérie
(86) Numéro de dépôt international: PCT/FR2015/050314
(87) Numéro de publication internationale: WO 2015/124843

(56) Documents cités:
- FR-A1- 2 891 782
- GB-A- 885 082
- JP-A- H1 150 703
- "AUSSTELLEINRICHTUNG, ANBAU", ZEICHNUNG DER GRAAFF, XX, XX, 10 avril 1996 (1996-04-10), page 1/02, XP002907546,

## Description

La présente invention concerne une structure d'abri, en particulier d'un plateau de charge, tel qu'une plateforme de camion, de remorque ou similaire, ainsi qu'un abri intégrant une telle structure.

Elle concerne plus particulièrement une structure d'abri comprenant :
- une pluralité d'arceaux parallèles formés chacun de montants en regard reliés entre eux par une traverse, lesdits arceaux, aptes à supporter au moins un élément de couverture de type bâche, étant déplaçables le long d'un chemin de guidage dans le sens d'un rapprochement et d'un écartement l'un de l'autre entre une position déployée de ladite structure, sous forme d'abri de ladite surface, et une position repliée de plus faible encombrement de ladite structure, libérant au moins une partie de ladite surface,
- des moyens de liaison entre les montants en regard de deux arceaux adjacents, au moins une partie desdits moyens de liaison étant montés mobiles suivant une direction transversale au plan de déplacement des montants lors du passage de la structure d'une position à une autre,
- et une pluralité d'arches, chaque arche étant reliée à un arceau par une liaison articulée pour passer d'une position de repli dans laquelle elle s'étend en applique contre ledit arceau à une position déployée dans laquelle elle forme une traverse supplémentaire, et inversement.

Une telle structure d'abri est décrite dans le brevet FR-2.891.782. Une telle structure présente l'avantage d'un chargement, par le haut ou l'un des côtés du plateau, d'un conteneur ou d'une cargaison classique. Toutefois, jusqu'à présent, une telle structure ne permet pas une optimisation de l'utilisation de la hauteur de la structure d'abri. En effet, en position repliée de la structure d'abri, position qui peut être utilisée pendant les phases de circulation sur route lorsque le plateau de charge supporte un conteneur, les arches, qui sont reliées aux arceaux par une liaison à pivotement autour d'un axe sensiblement parallèle à l'axe longitudinal de la traverse de l'arceau, s'étendent partiellement au-dessus des arceaux. En position déployée, les sommets des arceaux et des arches s'étendent sensiblement dans le même plan pour former un toit sensiblement plan. La partie des arches en saillie des arceaux en position repliée de la structure d'abri constitue une perte de volume de chargement en hauteur pour la structure d'abri. En effet, il est nécessaire d'abaisser la hauteur des arceaux pour pouvoir respecter le gabarit routier en position repliée de la structure.

Un but de la présente invention est donc de proposer une structure d'abri du type précité dont la conception permet d'optimiser le volume de chargement en hauteur de ladite structure sans nuire à la polyvalence de ladite structure.

A cet effet, l'invention a pour objet une structure d'abri d'une surface, en particulier d'un plateau de charge, tel qu'une plateforme de camion, de remorque ou similaire, ladite structure comprenant :
- une pluralité d'arceaux parallèles formés chacun de montants en regard reliés entre eux par une traverse, lesdits arceaux, aptes à supporter au moins un élément de couverture de type bâche, étant déplaçables le long d'un chemin de guidage dans le sens d'un rapprochement et d'un écartement l'un de l'autre entre une position déployée de ladite structure, sous forme d'abri de ladite surface, et une position repliée de plus faible encombrement de ladite structure, libérant au moins une partie de ladite surface,
- des moyens de liaison entre les montants en regard de deux arceaux adjacents, au moins une partie desdits moyens de liaison étant montés mobiles suivant une direction transversale au plan de déplacement des montants lors du passage de la structure d'une position à une autre,
- et une pluralité d'arches, chaque arche étant reliée à un arceau par une liaison articulée pour passer d'une position de repli dans laquelle elle s'étend en applique contre ledit arceau à une position déployée dans laquelle elle forme une traverse supplémentaire, et inversement,
caractérisée en ce que la liaison articulée entre arche et arceau est, pour au moins une, de préférence pour chaque, arche, au moins une liaison à pivotement de l'arche autour d'un axe sensiblement parallèle à l'axe longitudinal de la traverse dudit arceau, et à coulissement de l'arche le long d'un montant de l'arceau.

Grâce au fait que la liaison articulée entre arche et arceau est, pour au moins une, de préférence pour chaque, arche en sus d'une liaison à pivotement de l'arche autour d'un axe transversal à l'axe longitudinal du montant dudit arceau, au moins une liaison à coulissement de l'arche le long d'un axe sensiblement parallèle à l'axe longitudinal d'un montant de l'arceau, les sommets des arches et des arceaux s'étendent sensiblement dans un même plan sensiblement parallèle au plateau de charge, quelle que soit la position déployée ou repliée de la structure de sorte que le volume de chargement en hauteur de ladite structure est optimal par rapport au gabarit routier.

De préférence, chaque arche, reliée à un arceau par une liaison articulée à pivotement et à coulissement, est, sur au moins une partie de sa course, depuis la position déployée vers la position repliée, en parallèle de son déplacement à pivotement dans le sens d'un rapprochement de l'arceau auquel elle est reliée de manière articulée, montée mobile à coulissement dans le sens d'un rapprochement de l'extrémité inférieure des montants dudit arceau.

A l'inverse, chaque arche reliée à un arceau par une liaison articulée à pivotement et à coulissement est, sur au moins une partie de sa course, depuis la position repliée vers la position déployée, en parallèle de son déplacement à pivotement dans le sens d'un écartement de l'arceau auquel elle est reliée de manière articulée, montée mobile à coulissement dans le sens d'un rapprochement de l'extrémité supérieure des montants dudit arceau.

Selon l'invention, chaque arche reliée à un arceau par une liaison articulée à pivotement et à coulissement, est, en position déployée, verrouillée en déplacement à coulissement par l'intermédiaire de moyens de verrouillage. De préférence, les moyens de verrouillage en déplacement à coulissement de l'arche sont du type à déverrouillage automatique et sont déverrouillables par simple passage de l'arche de la position déployée à la position de repli.

De préférence, chaque arche affecte la forme d'un U inversé et la liaison articulée entre arche et arceau comprend des moyens de liaison articulée disposés au niveau de l'extrémité de chaque branche du U, entre une branche du U et un montant de l'arceau.

De préférence, la liaison articulée à pivotement et à coulissement entre arche et arceau comprend, au niveau de chaque montant de l'arceau, une lumière ménagée sur le montant de l'arceau et un pion porté par l'arche et déplaçable à coulissement dans ladite lumière.

De préférence, la lumière affecte la forme d'un L inversé avec une portion dite verticale sensiblement parallèle au montant de l'arceau, apte à être parcourue par le pion lors du passage de l'arche d'une position à une autre, et une portion horizontale apte à être occupée par le pion en position déployée de l'arche, et les moyens de verrouillage en déplacement à coulissement de ladite arche sont formés au moins partiellement par deux des bords de la portion horizontale de la lumière.

De préférence, chaque arche, reliée à un arceau par une liaison articulée à pivotement et à coulissement, est, en sus de sa liaison articulée à pivotement et à coulissement, couplée à chacun des montants de l'arceau par une biellette dont les extrémités sont couplées respectivement à l'arche et au montant d'arceau par une liaison pivot d'axe sensiblement orthogonal à l'axe longitudinal du montant d'arceau.

De préférence, ladite structure comprend, pour chaque arche reliée à un arceau par une liaison articulée à pivotement et à coulissement, des moyens de rappel de ladite arche en position déployée.

De préférence, les moyens de rappel comprennent au moins un ressort disposé à une extrémité de la biellette au niveau de la liaison de la biellette à l'arche.

De préférence, les moyens de liaison entre les montants de deux arceaux adjacents comprennent, par paire de montants en regard, un mât relié auxdits montants en regard desdits arceaux adjacents par l'intermédiaire de biellettes aptes à permettre le déplacement du mât d'un côté ou de l'autre du plan de déplacement des montants en regard lors du repli de ladite structure.

L'invention a également pour objet un abri d'une surface, en particulier d'un plateau de charge, tel qu'une plateforme de camion, de remorque ou similaire, ledit abri comprenant une structure d'abri et au moins un élément de couverture du genre bâche venant à recouvrement au moins partiel de ladite structure d'abri caractérisé en ce que ladite structure est du type précité.

L'invention sera bien comprise à la lecture de la description suivante d'exemples de réalisation, en référence aux dessins annexés dans lesquels :
la figure 1 représente une vue en perspective d'ensemble d'une structure d'abri conforme à l'invention ;

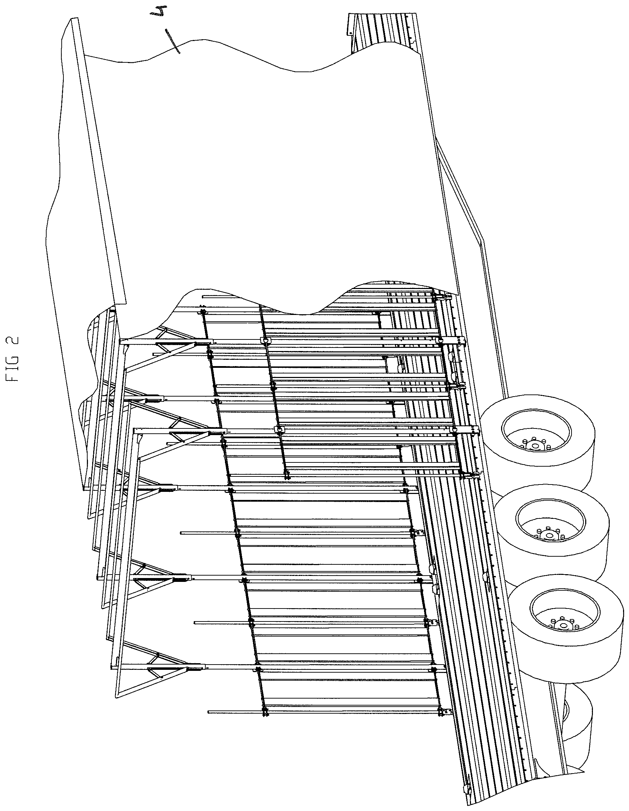

la figure 2 représente une vue partielle d'ensemble en perspective d'un abri conforme à l'invention ;

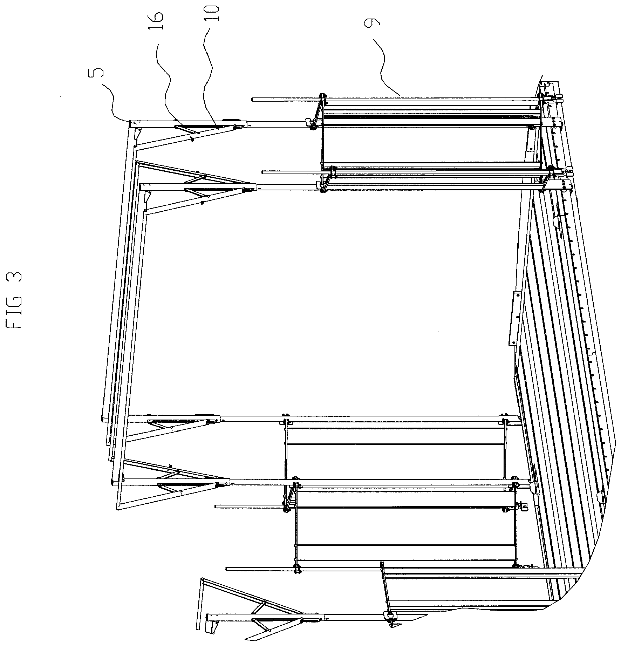

la figure 3 représente une vue partielle en perspective d'une structure d'abri au cours du repli de la structure d'abri ;

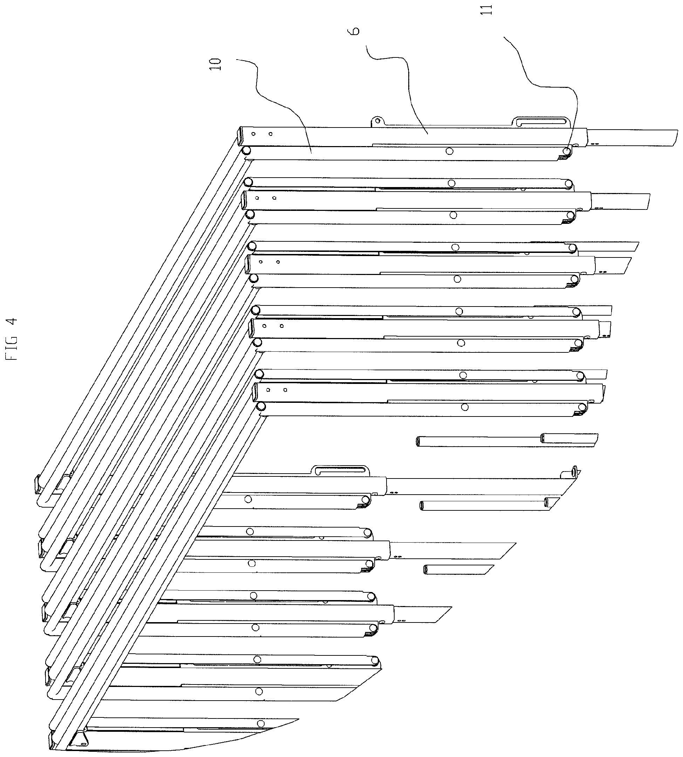

la figure 4 représente une vue partielle en perspective d'une structure d'abri en position repliée de ladite structure d'abri ;

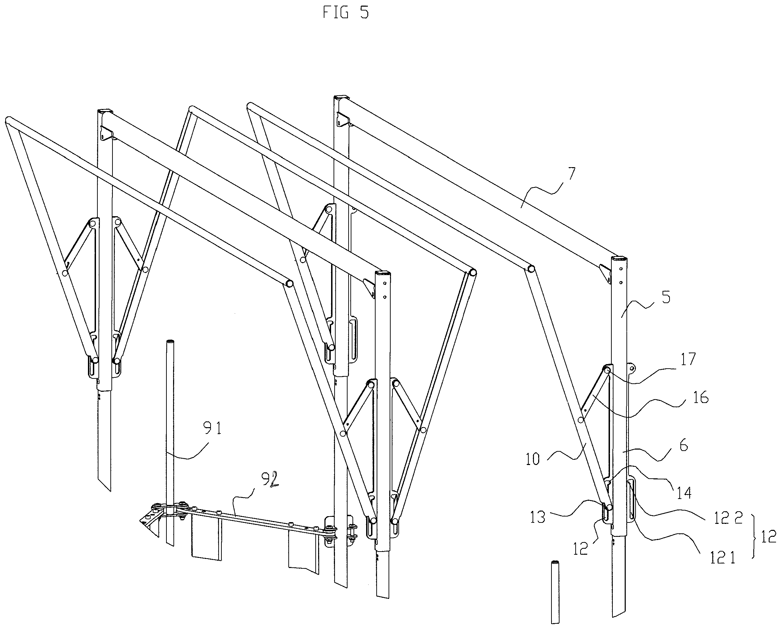

la figure 5 représente une vue partielle en perspective d'une structure d'abri au cours du passage de la position repliée à la position déployée de ladite structure d'abri ;

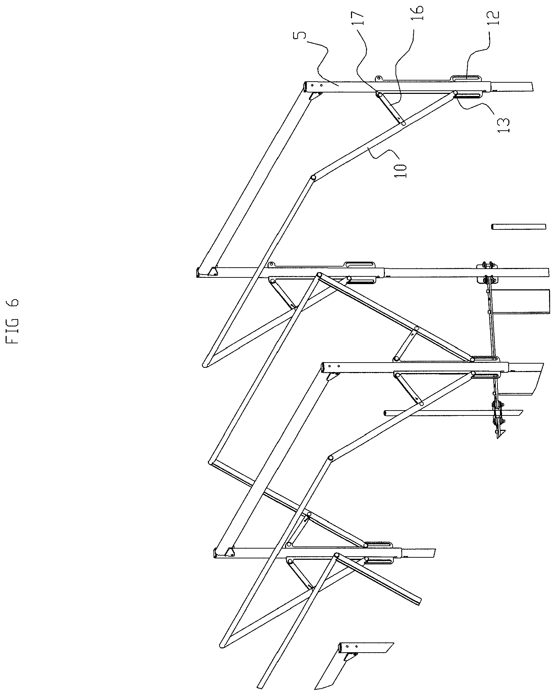

la figure 6 représente une vue partielle en perspective d'une structure d'abri en position déployée de ladite structure d'abri ;

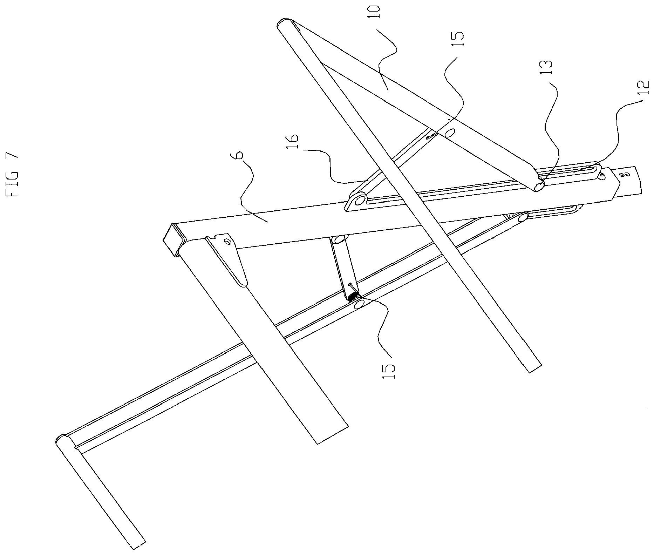

la figure 7 représente une vue partielle en perspective de deux arches reliées à un arceau ;
la figure 8 représente une vue partielle de la structure d'abri au niveau de sa liaison avec le chemin de guidage.

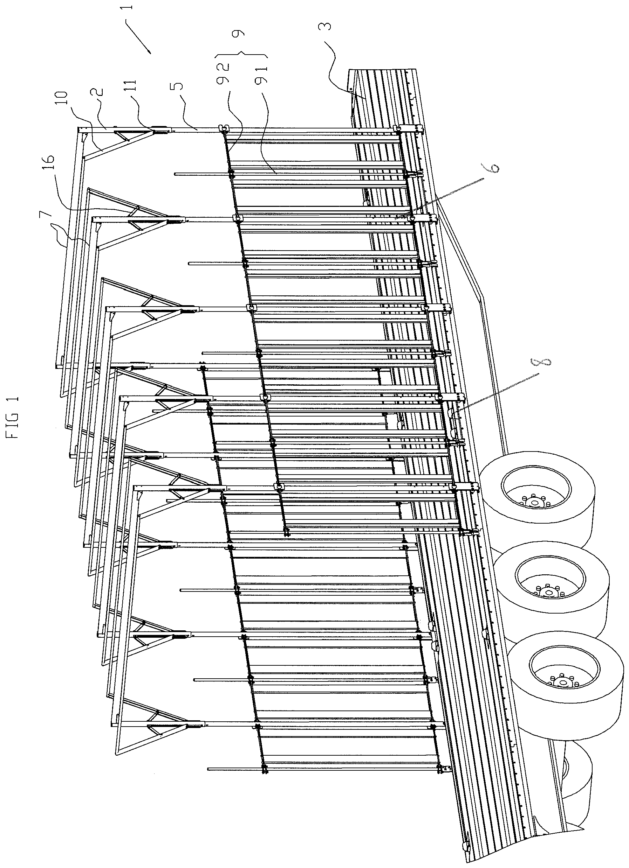

Comme mentionné ci-dessus, la structure 2 d'abri, objet de l'invention, se présente sous forme d'une ossature articulée apte à être recouverte d'au moins un élément 4 de couverture souple de type bâche pour former un abri 1 d'une surface 3 horizontale, telle qu'une plateforme de camion, comme illustré à la figure 1. Cette structure 2 est donc solidarisée au plateau de charge du camion afin de former une enceinte protectrice de la charge présente sur ledit plateau. Cette structure comprend une pluralité d'arceaux 5 aptes à supporter ledit au moins un élément 4 de couverture de type bâche. Ces arceaux 5 parallèles sont formés chacun de montants 6 en regard reliés entre eux par une traverse 7. Ces arceaux sont déplaçables le long d'un chemin 8 de guidage dans le sens d'un rapprochement et d'un écartement l'un de l'autre entre une position déployée de la structure 2 sous forme d'abri de ladite surface 3 et une position repliée de plus faible encombrement de ladite structure 2, libérant ainsi au moins une partie de ladite surface 3.

Dans l'exemple représenté à la figure 1, cinq arceaux ont été représentés. Le chemin 8 de guidage le long duquel les montants des arceaux coulissent est ménagé sur le plateau 3 de charge et est formé par les deux bords longitudinaux dudit plateau. Chaque bord longitudinal est constitué d'un rail ouvert en direction de l'extérieur du plateau dans lequel les montants d'arceaux peuvent coulisser au moyen de galets équipant leurs extrémités inférieures.

Ces galets sont portés par une platine qui forme avec les galets un chariot de support de montant 6 d'arceau. Le plateau 3 de charge comporte donc deux séries de montants 6 équipés de chariots, chaque série de montants se déplaçant dans un rail ménagé le long d'un bord longitudinal du plateau 3.

La structure 2 d'abri comporte encore des moyens 9 de liaison entre les montants 6 en regard de deux arceaux 5 adjacents. Au moins une partie desdits moyens 9 de liaison sont montés mobiles suivant une direction transversale au plan de déplacement des montants 6 lors du passage de la structure 2 d'une position à une autre.

Les moyens 9 de liaison entre les montants 6 de deux arceaux 5 adjacents comprennent, par paire de montants 6 en regard, un mât 91 relié auxdits montants 6 en regard desdits arceaux 5 adjacents par l'intermédiaire de biellettes 92 aptes à permettre le déplacement du mât 9, d'un côté ou de l'autre du plan de déplacement des montants 6 en regard, lors du repli de ladite structure 2.

Lesdites biellettes 92 permettent d'articuler l'ossature de la structure 2 de manière à pouvoir la replier. En effet, les mâts 91 n'étant pas montés à coulissement dans le chemin de guidage, ils peuvent se déplacer latéralement par rapport au plateau 3 permettant ainsi de faire passer la structure 2 d'abri dans une position repliée. En position repliée de la dite structure 2, les mâts 91 sont repoussés, vers l'intérieur ou vers l'extérieur du plateau, afin que la structure 2 adopte une forme de soufflet d'accordéon.

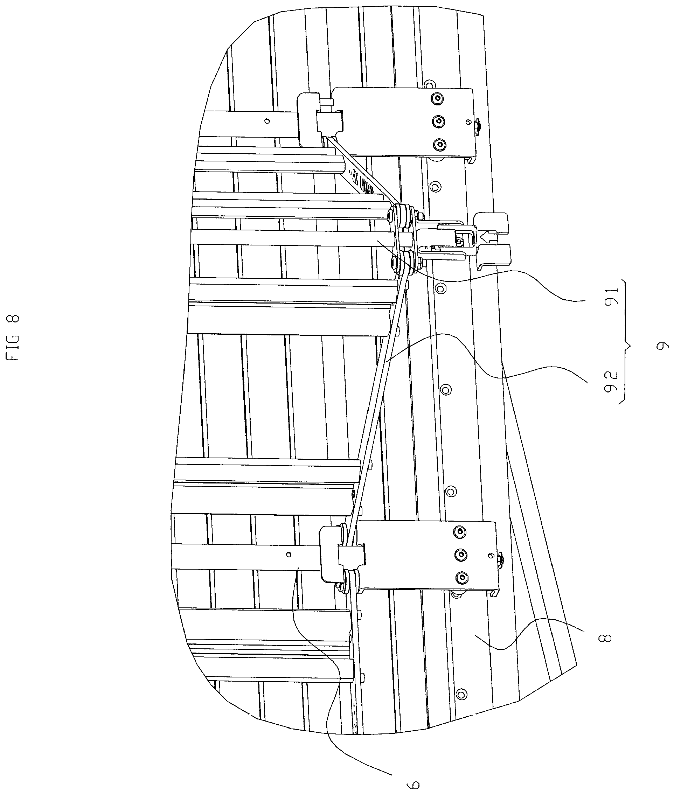

La figure 8 illustre le détail de la liaison entre montants 6 d'arceaux et mâts 91. Comme mentionné ci-dessus, deux montants 6 d'arceaux sont reliés chacun par deux biellettes 92 à un mât 91 parallèle aux montants 6 d'arceaux. Montant 6, mât 91 et biellettes forment à chaque fois un cadre articulé. Les biellettes 92 d'un cadre peuvent être reliées entre elles par des éléments de panneaux pour renforcer la résistance mécanique de la structure. Chaque mât 91 est équipé à chacune de ses extrémités d'une pièce de liaison du mât 91 aux biellettes 92. Ces biellettes 92 sont articulées sur ladite pièce de liaison autour d'un axe parallèle à l'axe du mât. De la même manière, chaque autre extrémité de biellette est articulée au chariot portant le montant 6 d'arceau ou à une pièce portée par ledit montant. A nouveau, cette articulation est réalisée à l'aide d'un pivot d'axe parallèle à l'axe du montant.

Comme mentionné ci-dessus, en position repliée de la structure, les mâts 91 peuvent se déplacer en direction de l'intérieur ou de l'extérieur du périmètre délimité par les montants 6 d'arceaux. Il est avantageux qu'un sens de repli des mâts 91 soit privilégié par rapport à l'autre. Ainsi, il peut être prévu, au voisinage d'au moins une extrémité de chaque mât, une butée mobile entre deux positions, l'une de verrouillage empêchant un déplacement du mât 91 dans une direction perpendiculaire au plan de déplacement des montants 6, l'autre autorisant un déplacement du mât 91 dans ladite direction. Cette butée permet, lors du repli de la structure, de définir un sens de repli privilégié dans lequel les opérations à effectuer sont rapides. En effet, pour replier ladite structure d'abri, il suffit d'exercer une poussée sur une extrémité de ladite structure 2. Cette poussée fait coulisser les deux séries de montants 6 le long de leur rail de guidage respectif rapprochant ainsi les montants d'une série les uns des autres et actionnant les articulations des biellettes 92. L'actionnement des biellettes 92 entraîne alors un mouvement des mâts 91 perpendiculairement à l'axe longitudinal du plateau pour donner à la structure une forme de soufflet d'accordéon. La présence des butées assure à l'opérateur effectuant la poussée que les mâts se replient tous dans le même sens.

Dans un mode de réalisation préféré, la position de verrouillage de la butée correspond à une position dans laquelle ladite butée empêche le déplacement du mât en direction de l'intérieur du périmètre délimité par les montants. Ainsi, le sens privilégié de repli des mâts correspond à un repli vers l'extérieur du plateau. Une simple poussée de l'opérateur entraîne donc un repli des mâts vers l'extérieur du plateau repliant ainsi la structure d'abri de manière à ce qu'elle libère complètement la surface du plateau. Ce mode de repli correspond à la position de transport de chargement classique. En effet, le plateau doit être dégagé pour permettre le chargement d'une cargaison par le haut ou le côté et ladite cargaison ne doit pas gêner le déploiement de la structure d'abri une fois le chargement effectué. Une fois repliés vers l'extérieur, les mâts 91 ne font pas saillie à l'intérieur du plateau 3, même lors de l'opération de dépliage.

En position déverrouillée, la butée permet le repli des mâts 91 indifféremment dans l'une ou l'autre direction, c'est-à-dire vers l'intérieur ou l'extérieur du périmètre délimité par le plateau. La butée est généralement réalisée sous forme d'une pièce pivotante ou coulissante s'étendant à l'extérieur du périmètre de la surface à couvrir au niveau du chemin de guidage en position déployée de la structure d'abri, ladite butée étant apte à pivoter suivant un axe parallèle au chemin de guidage ou à coulisser suivant un axe perpendiculaire au chemin de guidage, de manière à passer d'une position active à une position inactive.

La position active correspond à la position de verrouillage dans laquelle seul le repli des mâts vers l'extérieur est possible. En position inactive les deux sens sont envisageables.

La structure 2 d'abri comprend encore une pluralité d'arches 10. Chaque arche 10 est reliée à un arceau 5 par une liaison 11 articulée pour passer d'une position de repli, dans laquelle elle s'étend en applique contre ledit arceau 5, à une position déployée dans laquelle elle forme une traverse supplémentaire et inversement.

De manière caractéristique à l'invention, la liaison 11 articulée entre arche 10 et arceau 5 est, pour au moins l'une des arches, en l'occurrence ici pour chacune des arches 10, une liaison à pivotement de l'arche 10 autour d'un axe sensiblement parallèle à l'axe longitudinal de la traverse 7 dudit arceau 5, et à coulissement de l'arche 10 le long d'un axe sensiblement parallèle à l'axe longitudinal d'un montant 6 de l'arceau 5.

Dans les exemples représentés, chaque arche 10 affecte la forme d'un U inversé et la liaison 11 articulée entre arche 10 et arceau 5 comprend des moyens de liaison articulée disposés au niveau de chaque branche du U entre l'extrémité d'une branche du U et un montant 6 de l'arceau 5.

La liaison 11 articulée à pivotement et à coulissement entre arche 10 et arceau 5 comprend, au niveau de chaque montant de l'arceau 5, une lumière 12 oblongue ménagée sur le montant 6 de l'arceau 5 et un pion 13 porté par l'arche 10 et déplaçable à coulissement dans ladite lumière 12.

La lumière 12 affecte la forme d'un L inversé avec une portion 121 dite verticale sensiblement parallèle au montant 6 de l'arceau 5, apte à être parcourue par le pion 13 lors du passage de l'arche 10 d'une position à une autre, et une portion 122 horizontale apte à être occupée par le pion 13 en position déployée de l'arche 10. Les moyens 14 de verrouillage en déplacement à coulissement de ladite arche 10 sont formés au moins partiellement par deux des bords de la portion 122 horizontale de la lumière 12.

Ainsi, chaque arche 10 reliée à un arceau 5 par une liaison 11 articulée à pivotement et à coulissement, est, en position déployée, verrouillée en déplacement à coulissement. Chaque arche 10, reliée à un arceau 5 par une liaison 11 articulée à pivotement et à coulissement, est, en sus de sa liaison 11 articulée à pivotement et à coulissement, couplée à chacun des montants 6 de l'arceau 5 par une biellette 16 dont les extrémités sont couplées respectivement à l'arche 10 et au montant 6 d'arceau 5 par une liaison 17 pivot d'axe orthogonal à l'axe longitudinal du montant 6 d'arceau 5 et sensiblement parallèle à l'axe longitudinal de la traverse dudit arceau 5. Ladite structure 2 comprend, pour chaque arche 10 reliée à un arceau 5 par une liaison 11 articulée à pivotement et à coulissement, des moyens 15 de rappel de ladite arche 10 en position déployée. Les moyens 15 de rappel comprennent ici un ressort disposé à une extrémité de la biellette 16 au niveau de la liaison de la biellette 16 à l'arche 10. Chaque arche 10, reliée à un arceau 5 par une liaison 11 articulée à pivotement et à coulissement, est, sur au moins une partie de sa course, depuis la position déployée vers la position repliée, en parallèle de son déplacement à pivotement dans le sens d'un rapprochement de l'arceau 5 auquel elle est reliée de manière articulée, montée mobile à coulissement dans le sens d'un rapprochement de l'extrémité inférieure des montants 6 dudit arceau 5. A l'inverse, chaque arche 10, reliée à un arceau 5 par une liaison 11 articulée à pivotement et à coulissement, est, sur au moins une partie de sa course depuis la position repliée vers la position déployée, en parallèle de son déplacement à pivotement dans le sens d'un écartement de l'arceau 5 auquel elle est reliée de manière articulée, monté mobile à coulissement dans le sens d'un rapprochement de l'extrémité supérieure des montants 6 dudit arceau 5.

Dans cette position déployée, les pions de l'arche viennent se positionner dans la portion horizontale des lumières des montants de sorte que dans cette position, tout déplacement à coulissement de l'arche le long desdits montants est empêché.

La structure 2 d'abri est recouverte généralement d'au moins un élément 4 de couverture. Dans un mode de réalisation avantageux, la structure 2 d'abri supporte deux éléments 4 de couverture souples du type bâche, l'un desdits éléments 4 de couverture souples venant à recouvrement des faces latérales de la structure d'abri, l'autre venant recouvrir le toit de la structure d'abri. L'élément de couverture souple latéral est de préférence réalisé en deux parties, chacune d'elles couvrant une face latérale du volume de chargement.

Cette conception permet un positionnement aisé de l'élément de couverture souple de toit indépendamment des éléments de couverture souples latéraux. Lesdits éléments de couverture souples sont solidarisés à l'ossature de la structure 1 d'abri par des moyens intégrés à ces éléments de couverture souples. En effet, chaque arche 10 est logée au moins partiellement dans un fourreau de l'élément de couverture souple de type bâche venant à recouvrement du toit de la structure d'abri afin de garantir le guidage de cette dernière. Des fourreaux sont donc ménagés dans l'élément de couverture de toit afin de pouvoir y insérer les arches 10. De préférence, ces fourreaux (non représentés) sont obtenus par couture d'un empiècement sur la face intérieure de la bâche. Cet empiècement délimitant avec la bâche un conduit traversant. Cet empiècement est équipé de moyens auto-agrippants de type Velcro (marque déposée) pour passer d'une position ouverte, où l'introduction d'une traverse de l'arche à l'intérieur du fourreau est possible, à une position fermée où traverse et bâche de toit sont solidaires. Des fourreaux sensiblement identiques peuvent aussi être disposés sur l'élément de couverture souple latéral de manière à le solidariser avec les mâts. Dans ce cas, chaque mât s'insère dans un fourreau ménagé sur l'élément de couverture latéral.

Les opérations nécessaires pour replier la structure d'abri vers l'intérieur du périmètre délimité par le plateau 3 vont maintenant être décrites. Le repli des mâts 91 vers l'extérieur étant privilégié, il est nécessaire de déverrouiller les butées afin de pouvoir procéder au repli dans l'autre direction. Les butées ne sont en général pas accessibles directement depuis l'extérieur du plateau 3. Elles sont en effet recouvertes par l'élément de couverture souple latéral. Ainsi, l'élément de couverture souple latéral du genre bâche supporté par la structure d'abri est repliable vers l'extérieur, au niveau de sa base, pour former un rabat maintenu en applique contre la face externe de la bâche par des moyens de maintien appropriés, de manière à faciliter l'accès aux butées de verrouillage. On relève donc la bâche au niveau du chemin de guidage à la manière d'un ourlet, afin de découvrir les butées. Un système de sangles disposées sur la longueur de ladite structure souple permet de maintenir la bâche en position pendant que l'opérateur opère le déverrouillage des butées.

Pour replier la structure en positionnant les mâts 91 vers l'intérieur, on commence par ouvrir la porte arrière du plateau et désolidariser le cadre de ladite porte arrière du plateau. En effet, en position de transport, le cadre de la porte arrière est évidemment immobilisé par rapport au plateau de manière à éviter un coulissement et un repli involontaires de la structure d'abri. On relève ensuite la bâche latérale au moyen des sangles puis on déverrouille les butées de manière à autoriser le déplacement des mâts vers l'intérieur du plateau. De préférence, on ne déverrouille pas la butée équipant le mât 91 situé le plus près de l'arrière du plateau. On dispose ainsi d'une structure rigide pour effectuer plus facilement une poussée sur la structure d'abri. On oriente ensuite légèrement chaque mât 91 et l'articulation lui correspondant vers l'intérieur du plateau. Ainsi, une simple poussée va provoquer le repli des mâts dans le sens souhaité. On opère alors une poussée sur le cadre arrière de la structure 1 d'abri de manière à faire coulisser les montants 6 d'arceaux et à replier ladite structure en forme de soufflet d'accordéon. Au cours de ce déplacement, les arches se déplacent à pivotement dans le sens d'un rapprochement des montants d'arceaux et à coulissement en direction des extrémités inférieures desdits montants. Une fois la structure d'abri repliée, on déverrouille alors la dernière butée afin de replier le dernier mât. La position repliée vers l'intérieur des mâts 91 correspond à la position de transport de conteneur. En effet, le plateau étant libre, le chargement d'un tel conteneur, au moyen d'une grue par exemple, est possible. De plus, les mâts 91 ne dépassant pas du gabarit du plateau 3, le transport sur route du conteneur est autorisé.

Le déploiement de la structure s'opère par simple déplacement inverse à coulissement des montants d'arceaux le long du chemin de guidage. Comme le sommet des arches s'étend en position déployée au même niveau que celui du sommet des arches en position repliée, le volume de chargement en hauteur de la structure d'abri est optimal.

## Revendications

1. Structure (2) d'abri d'une surface (3), en particulier d'un plateau de charge, tel qu'une plateforme de camion, de remorque ou similaire, ladite structure (2) comprenant :
- une pluralité d'arceaux (5) parallèles formés chacun de montants (6) en regard reliés entre eux par une traverse (7), lesdits arceaux (5), aptes à supporter au moins un élément (4) de couverture de type bâche, étant déplaçables le long d'un chemin (8) de guidage dans le sens d'un rapprochement et d'un écartement l'un de l'autre entre une position déployée de ladite structure (2), sous forme d'abri de ladite surface (3), et une position repliée de plus faible encombrement de ladite structure (2), libérant au moins une partie de ladite surface (3),
- des moyens (9) de liaison entre les montants (6) en regard de deux arceaux (5) adjacents, au moins une partie desdits moyens (9) de liaison étant montés mobiles suivant une direction transversale au plan de déplacement des montants (6) lors du passage de la structure (2) d'une position à une autre,
- et une pluralité d'arches (10), chaque arche (10) étant reliée à un arceau (5) par une liaison (11) articulée pour passer d'une position de repli dans laquelle elle s'étend en applique contre ledit arceau (5) à une position déployée dans laquelle elle forme une traverse supplémentaire, et inversement,
**caractérisée en ce que** la liaison (11) articulée entre arche (10) et arceau (5) est, pour au moins une, de préférence pour chaque, arche (10), au moins une liaison à pivotement de l'arche (10) autour d'un axe sensiblement parallèle à l'axe longitudinal de la traverse (7) dudit arceau (5), et à coulissement de l'arche (10) le long d'un montant (6) de l'arceau (5), **en ce que** chaque arche (10) reliée à un arceau (5) par une liaison (11) articulée à pivotement et à coulissement, est, en position déployée, verrouillée en déplacement à coulissement par l'intermédiaire de moyens (14) de verrouillage et **en ce que** les moyens de verrouillage en déplacement à coulissement de l'arche sont du type à déverrouillage automatique et sont déverrouillables par simple passage de l'arche (10) de la position déployée à la position de repli.

2. Structure (2) selon la revendication 1,
**caractérisée en ce que** chaque arche (10), reliée à un arceau (5) par une liaison (11) articulée à pivotement et à coulissement, est, sur au moins une partie de sa course, depuis la position déployée vers la position repliée, en parallèle de son déplacement à pivotement dans le sens d'un rapprochement de l'arceau (5) auquel elle est reliée de manière articulée, montée mobile à coulissement dans le sens d'un rapprochement de l'extrémité inférieure des montants (6) dudit arceau (5).

3. Structure (2) selon l'une des revendications précédentes,
**caractérisée en ce que** chaque arche (10) affecte la forme d'un U inversé et **en ce que** la liaison (11) articulée entre arche (10) et arceau (5) comprend des moyens de liaison articulée disposés au niveau de l'extrémité de chaque branche du U entre une branche du U et un montant (16) de l'arceau (5).

4. Structure (2) selon l'une des revendications précédentes,
**caractérisée en ce que** la liaison (11) articulée à pivotement et à coulissement entre arche (10) et arceau (5) comprend, au niveau de chaque montant (6) de l'arceau (5), une lumière (12) ménagée sur le montant (6) de l'arceau (5) et un pion (13) porté par l'arche (10) et déplaçable à coulissement dans ladite lumière (12).

5. Structure (2) selon la revendication 4,
**caractérisée en ce que** la lumière (12) affecte la forme d'un L inversé avec une portion (121) dite verticale sensiblement parallèle au montant (6) de l'arceau (5), apte à être parcourue par le pion (13) lors du passage de l'arche (10) d'une position à une autre, et une portion (122) horizontale apte à être occupée par le pion (13) en position déployée de l'arche (10), et **en ce que** les moyens (14) de verrouillage en déplacement à coulissement de ladite arche (10) sont formés au moins partiellement par deux des bords de la portion (122) horizontale de la lumière (12).

6. Structure (2) selon l'une des revendications précédentes,
**caractérisée en ce que** chaque arche (10), reliée à un arceau (5) par une liaison (11) articulée à pivotement et à coulissement, est, en sus de sa liaison (11) articulée à pivotement et à coulissement, couplée à chacun des montants (6) de l'arceau (5) par une biellette (16) dont les extrémités sont couplées respectivement à l'arche (10) et au montant (6) d'arceau (5) par une liaison (17) pivot d'axe sensiblement orthogonal à l'axe longitudinal du montant (6) d'arceau (5).

7. Structure (2) selon l'une des revendications précédentes,
**caractérisée en ce que** ladite structure (2) comprend, pour chaque arche (10) reliée à un arceau (5) par une liaison (11) articulée à pivotement et à coulissement, des moyens (15) de rappel de ladite arche (10) en position déployée.

8. Structure (2) selon la revendication 7, prise en combinaison avec la revendication 6,
**caractérisée en ce que** les moyens (15) de rappel comprennent au moins un ressort disposé à une extrémité de la biellette (16) au niveau de la liaison de la biellette (16) à l'arche (10).

9. Structure (2) selon l'une des revendications précédentes,
**caractérisée en ce que** les moyens (9) de liaison entre les montants (6) de deux arceaux (5) adjacents comprennent, par paire de montants (6) en regard, un mât (91) relié auxdits montants (6) en regard desdits arceaux (5) adjacents par l'intermédiaire de biellettes (92) aptes à permettre le déplacement du mât (9) d'un côté ou de l'autre du plan de déplacement des montants (6) en regard lors du repli de ladite structure (2).

10. Abri (1) d'une surface (3), en particulier d'un plateau de charge, tel qu'une plateforme de camion, de remorque ou similaire, ledit abri (1) comprenant une structure (2) d'abri et au moins un élément (4) de couverture du genre bâche venant à recouvrement au moins partiel de ladite structure (2) d'abri **caractérisé en ce que** ladite structure (2) est conforme à l'une des revendications 1 à 9.

## Patentansprüche

1. Schutzkonstruktion (2) für eine Oberfläche (3), insbesondere eine Lastplatte wie z.B. eine Ladefläche eines Lkw, eines Anhängers o.ä., wobei die Konstruktion (2) umfasst:
- eine Merzahl paralleler Bügel (5), die jeweils aus einander gegenüberliegenden Ständern (6), die über eine Traverse (7) verbunden sind, wobei die Bügel (5) geeignet sind, mindestens ein Abdeckungselement (4) in der Art einer Abdeckplane zu tragen, und entlang einer Gleitbahn (8) zwischen einer ausgefahrenen Position der Konstruktion (2) zur Abdeckung der Oberfläche (3) und einer kompakteren eingefahrenen Position der Konstruktion (2), die mindestens einen Teil der Oberfläche (3) frei macht, bewegbar sind, um sich einander zu nähern oder sich voneinander zu entfernen,
- Mittel (9) zur Verbindung der Ständer (6) in Bezug auf zwei benachbarte Bügel (5), wobei mindestens ein Teil der Verbindungsmittel (9) in eine Richtung beweglich montiert sind, die quer zur Verschiebungsebene der Ständer (6) beim Übergang der Konstruktion (2) von einer Position in die andere verläuft,
- und eine Mehrzahl Bögen (10), wobei jeder Bogen (10) durch eine gelenkige Verbindung (11) mit einem Bügel (5) verbunden, um von einer eingefahrenen Position, in der er auf dem Bügel (5) aufsitzt, in eine ausgefahrene Position, in der er eine zusätzliche Traverse bildet, überzugehen, und umgekehrt, **dadurch gekennzeichnet, dass** die Verbindung (11) zwischen Bogen (10) und Bügel (5) für mindestens einen, vorzugsweise für jeden Bogen (10) mindestens eine Schwenkverbindung des Bogens (10) um eine im Wesentlichen parallel zur Längsachse der Traverse (7) des Bügels (5) verlaufende Achse und eine Verbindung zum Gleiten des Bogens (10) entlang einem Ständer (6) des Bügels (5) ist, dass jeder Bogen (10), der durch eine schwenkende und gleitende Gelenkverbindung (11) mit einem Bügel (5) verbunden ist, in der ausgefahrenen Position in Gleitrichtung gesperrt ist durch Verriegelungsmittel (14) und dass die Verriegelungsmittel des Bogens selbsttätig ausklinkend sind und durch den einfachen Übergang des Bogens (10) aus der ausgefahrenen in die eingefahrene Position entriegelbar sind.

2. Konstruktion (2) nach Anspruch 1,
**dadurch gekennzeichnet, dass** jeder Bogen (10), der durch eine schwenkende und gleitende Gelenkverbindung (11) mit einem Bügel (5) verbunden ist, über mindestens einen Teil des Übergangs von der ausgefahrenen in die eingefahrene Position parallel zu seiner Schwenkung zur Annäherung an den Bügel (5), mit dem er gelenkig verbunden ist, zur Annäherung an das untere Ende der Ständer (6) des Bügels (5) gleitend montiert ist.

3. Konstruktion (2) nach einem der vorstehenden Ansprüche,
**dadurch gekennzeichnet, dass** jeder Bogen (10) eine umgekehrte U-Form aufweist und dass die Gelenkverbindung (11) zwischen Bogen (10) und Bügel (5) Gelenkverbindungsmittel umfasst, die auf Höhe des Endes jedes Zweigs des U zwischen einem Zweig des U und einem Ständer (16) des Bügels (5) angeordnet sind.

4. Konstruktion (2) nach einem der vorstehenden Ansprüche,
**dadurch gekennzeichnet, dass** die schwenkende und gleitende Gelenkverbindung (11) zwischen Bogen (10) und Bügel (5) auf Höhe jedes Ständers (6) des Bügels (5) ein Licht (12), das auf dem Ständer (6) des Bügels (5) angeordnet ist, und einen Zapfen (13), der vom Bogen (10) getragen wird und im Licht (12) verschiebbar ist, umfasst.

5. Konstruktion (2) nach Anspruch 4,
**dadurch gekennzeichnet, dass** das Licht (12) eine umgekehrte L-Form aufweist, wobei ein "vertikaler" Abschnitt (121) im Wesentlichen parallel zum Ständer (6) des Bogens (5) ist und geeignet ist, vom Zapfen (13) beim Übergang des Bogens (10) von einer Position in eine andere durchlaufen zu werden, und wobei ein horizontaler Abschnitt (122) geeignet ist, in der ausgefahrenen Position des Bogens (10) vom Zapfen (13) belegt zu werden, und dass die Verriegelungsmittel (14) des Bogens (10) mindestens teilweise aus zwei der Kanten des horizontalen Abschnitts (122) des Lichts (12) ausgebildet sind.

6. Konstruktion (2) nach einem der vorstehenden Ansprüche,
**dadurch gekennzeichnet, dass** jeder Bogen (10), der durch eine schwenkende und gleitende Gelenkverbindung (11) mit einem Bügel (5) verbunden ist, neben der Gleitverbindung (11) durch einen Schwingarm (16), dessen Enden jeweils mit dem Bogen (10) und dem Ständer (6) des Bügels (5) durch eine Schwenkverbindung (17) mit einer Achse, die im Wesentlichen orthogonal zur Achse des Ständers (6) des Bügels (5) verläuft, mit jedem der Ständer (6) des Bügels (5) gekuppelt ist.

7. Konstruktion (2) nach einem der vorstehenden Ansprüche,
**dadurch gekennzeichnet, dass** jede Struktur (2) für jeden Bogen, der durch eine schwenkende und gleitende Gelenkverbindung (11) mit einem Bügel (5) verbunden ist, Mittel (15) zum Zurückstellen des Bogens (10) in die ausgefahrene Position umfasst.

8. Konstruktion (2) nach Anspruch 7 in Verbindung mit Anspruch 6,
**dadurch gekennzeichnet, dass** die Rückstellmittel (15) mindestens eine Feder umfassen, die an einem Ende des Schwingarms (16) auf Höhe der Verbindung zwischen Schwingarm (16) und Bogen (10) angeordnet ist.

9. Konstruktion (2) nach einem der vorstehenden Ansprüche,
**dadurch gekennzeichnet, dass** die Verbindungsmittel (9) zwischen den Ständern (6) von zwei benachbarten Bügeln (5) für jedes Paar einander gegenüberliegender Ständer (6) umfassen: eine Stange (91), die gegenüber den benachbarten Bügeln (5) durch Schwingarme (92) mit den Ständern (6) verbunden ist, die geeignet sind, beim Einfahren der Konstruktion (2) die Bewegung (9) der Stange von einer Seite zur anderen Seite der Verschiebungsebene der einander gegenüberliegenden Ständer (6) zu ermöglichen.

10. Abdeckung (1) für eine Oberfläche (3), insbesondere eine Lastplatte wie z.B. eine Ladefläche eines Lkw, eines Anhängers o.ä., wobei die Abdeckung (1) eine Schutzukonstruktion (2) und mindestens ein Abdeckungselement (4) vom Typ einer Abdeckplane umfasst, um die mindestens teilweise Abdeckung der Schutzkonstruktion (2) zu gewährleisten, **dadurch gekennzeichnet, dass** es sich bei der Konstruktion (2) um eine Konstruktion (2) nach einem der Ansprüche 1 - 9 handelt.

## Claims

1. A shelter structure (2) for a surface (3), in particular a loading floor, such as a platform of a truck, trailer or the like, said structure (2) comprising:
- a plurality of parallel hoops (5) each formed by facing uprights (6) connected to one another by a crosspiece (7), said hoops (5), capable of supporting at least one covering element (4) of the tarp type, being movable along a guide path (8) in the direction coming closer to and further away from one another between a deployed position of said structure (2), in the form of a shelter of said surface (3), and a folded, smaller bulk position of said structure (2), freeing at least part of said surface (3),
- connecting means (9) between the facing uprights (6) of two adjacent hoops (5), at least part of said connecting means (9) being mounted moving along a direction transverse to the movement plane of the uprights (6) during the passage of the structure (2) from one position to another,
- and a plurality of arches (10), each arch (10) being connected to a hoop (5) by a connection (11) articulated to go from a folded position in which it extends pressed against said hoop (5) to a deployed position in which it forms an additional crosspiece, and vice versa,
**characterized in that** the connection (11) articulated between arch (11) and hoop (5) is, for at least one, preferably for each, arch (10), at least one pivoting connection of the arch (10) around an axis substantially parallel to the longitudinal axis of the crosspiece (7) of said hoop (5), and sliding connection of the arch (10) along an upright (6) of the hoop (5), **in that** each arch (10) connected to a hoop (5) by a pivoting and sliding articulated connection (11) is, in the deployed position, locked in sliding movement by a locking means (14) and **in that** the sliding movement locking means of the arch are of the automatic unlocking type and are unlocked by simple passage of the arch (10) from the deployed position to the folded position.

2. The structure (2) according to claim 1,
**characterized in that** each arch (10), connected to a hoop (5) by a pivoting and sliding articulated connection (11), is, over at least part of its travel, from the deployed position toward the folded position, in parallel with its pivoting movement in the direction coming closer to the hoop (5) to which it is connected in an articulated manner, mounted slidingly movable in the direction coming closer to the lower end of the uprights (6) of said hoop (5).

3. The structure (2) according to one of the preceding claims,
**characterized in that** each arch (10) assumes the form of an inverted U and **in that** the articulated connection (11) between arch (10) and hoop (5) comprises articulated connecting means arranged at the end of each branch of the U between a branch of the U and an upright (16) of the hoop (5).

4. The structure (2) according to one of the preceding claims,
**characterized in that** the pivoting and sliding articulated connection (11) between arch (10) and hoop (5) comprises, at each upright (6) of the hoop (5), a lumen (12) arranged on the upright (6) of the hoop (5) and a pin (13) carried by the arch (10) and slidingly movable in said lumen (12).

5. The structure (2) according to claim 4,
**characterized in that** the lumen (12) assumes the shape of an inverted L with a so-called vertical portion (121) substantially parallel to the upright (6) of the hoop (5), able to be traveled by the pin (13) during the passage of the arch (10) from one position to another, and a horizontal portion (122) able to be occupied by the pin (13) in the deployed position of the arch (10), and **in that** the locking means (14) for locking the sliding movement of said arch (10) are formed at least partially by two of the edges of the horizontal portion (122) of the lumen (12).

6. The structure (2) according to one of the preceding claims,
**characterized in that** each arch (10), connected to a hoop (5) by a pivoting and sliding articulated connection (11), is, in addition to its pivoting and sliding articulated connection (11), coupled to each of the uprights (6) of the hoop (5) by a connecting rod (16) whereof the ends are respectively coupled to the arch (10) and the upright (6) of the hoop (5) by a pivot link (17) having an axis substantially orthogonal to the longitudinal axis of the hoop (5) upright (6).

7. The structure (2) according to one of the preceding claims,
**characterized in that** said structure (2) comprises, for each arch (10) connected to a hoop (5) by a pivoting and sliding articulated connection (11), means (15) for returning said arch (10) to the deployed position.

8. The structure (2) according to claim 7, combined with claim 6,
**characterized in that** the return means (15) comprise at least one spring arranged at an end of the connecting rod (16) at the connection of the connecting rod (16) to the arch (10).

9. The structure (2) according to one of the preceding claims,
**characterized in that** the connecting means (9) between the uprights (6) of two adjacent hoops (5) comprise, per pair of facing uprights (6), a mast (91) connected to said facing uprights (6) of said adjacent hoops (5) by means of connecting rods (92) able to allow the movement of the mast (9) on one side or the other of the movement plane of the facing uprights (6) during the folding of said structure (2).

10. A shelter (1) for a surface (3), in particular a loading floor, such as a platform of a truck, trailer or the like, said shelter (1) comprising a shelter structure (2) and at least one covering element (4) of the tarp type at least partially covering said shelter structure (2), **characterized in that** said structure (2) is according to one of claims 1 to 9.
